# EUROPEAN PATENT APPLICATION

(11) **EP 2 832 615 A1**
(43) Date of publication of application: **04.02.2015**
(21) Application number: 13769615.9
(22) Date of filing: 22.03.2013
(51) Int. Cl.: B60W 10/10, B60K 6/26, B60K 6/36, B60K 6/448, B60L 11/14, B60W 10/08, B60W 20/00

(54) **VEHICLE DRIVE MECHANISM**

(30) Priority: 27.03.2012 JP 2012071378
(71) Applicant: Kabushiki Kaisha Toyota Jidoshokki, Kariya-shi, Aichi 448-8671 (JP)
(72) Inventor: YOSHIHARA, Koji, Kariya-shi Aichi 448-8671 (JP); MATSUMOTO, Shohei, Kariya-shi Aichi 448-8671 (JP)
(74) Representative: TBK
(86) International application number: PCT/JP2013/058309
(87) International publication number: WO 2013/146591

(57) **Abstract**

A vehicle drive mechanism comprises an engine and a double rotor motor as sources of motive power. The engine generates motive power by internally burning gasoline fuel. The dual rotor motor is operated by three-phase AC electric power. A control unit controls first and second inverters so as to generate first and second electromotive torque between a first rotor and a second rotor and between a stator and the second rotor respectively, and the control unit also fixes with a disk brake the drive shaft and the first rotor which rotates integrally with the drive shaft, so as to not be rotatable.

## Description

### TECHNICAL FIELD

This invention relates to a vehicle drive mechanism, and more particularly, to a vehicle drive mechanism for a hybrid automobile comprising an engine and a motor as sources of motive power.

### BACKGROUND ART

Hybrid vehicles comprising an engine and a motor as sources of motive power are starting to become widespread. Referring to Patent Document 1, Fig.8 illustrates a vehicle drive mechanism for a hybrid automobile comprising an engine and a dual rotor motor. The dual rotor motor disclosed here has a first rotor which is coupled to the drive shaft of the engine, a second rotor which is provided to the outside of the first rotor in the radial direction and is coupled to the vehicle axle, and a stator which is disposed outside the second rotor in the radial direction and is fixed to a housing. A first coil is provided on the first rotor, and a second coil is provided on the stator. Furthermore, a first magnet is provided in the inner circumferential side of the second rotor so as to oppose the first coil of the first rotor, and a second magnet is provided in the outer circumferential side of the second rotor so as to oppose the second coil of the stator.

In a hybrid automobile comprising the above described vehicle drive mechanism, when the vehicle is driven by the motor only and the engine is stopped, electric power is supplied to the second coil of the stator by an inverter so as to generate a magnetic field, and an electromotive torque is generated between the second coil of the stator and the second magnet of the second rotor. When the second rotor is rotated by this electromotive torque, the vehicle axle coupled to the second rotor is driven and the vehicle moves.

Patent Document 1: Japanese Patent Application Publication No. 2005-47396

However, in the above described structure, when electric power is supplied to the first coil of the first rotor so as to generate the electromotive torque between the first coil of the first rotor and the first magnet of the second rotor and to increase the drive force of the second rotor by this electromotive torque, the first rotor is also rotated by a reactive force caused by the rotation of the second rotor. As a result, the engine coupled to the first rotor is also driven, and loss of motive force occurs. Furthermore, even if the reactive force caused by the rotation of the second rotor is slight and the first rotor is not rotated greatly, there is a possibility of eccentric wear and deterioration of the cylinders and/or piston rings of the engine due to continuous variations of the torque. Therefore, in the vehicle drive mechanism disclosed in Patent Document 1, the generation of electromotive torque between the first rotor and the second rotor must be avoided, and thus the torque which can be generated by the dual rotor motor cannot be used sufficiently.

### DISCLOSURE OF THE INVENTION

The present invention is devised in order to solve the above described problems, and its aim is to provide a vehicle drive mechanism for a hybrid automobile which can sufficiently use the torque that can be generated by a motor, while preventing loss of motive force and deterioration of an engine, when the vehicle is driven by the motor only and the engine is stopped.

In order to solve the above problems, the vehicle drive mechanism related to the invention comprises: an internal combustion engine generating motive power by burning fuel; a rotating electrical machine comprising a first rotor mechanically coupled to the internal combustion engine, a second rotor disposed on the outer side of the first rotor in the radial direction and mechanically coupled to a vehicle axle, and a stator disposed on the outer side of the second rotor in the radial direction; power supply means for supplying electric power to the rotating electrical machine; fixing means for fixing the first rotor so as not to be rotatable; and control means for controlling the power supply means and the fixing means, wherein when a vehicle is driven by the rotating electrical machine and the internal combustion engine is stopped, the control means supplies electric power to the rotating electrical machine from the power supply means so as to generate first and second electromotive torque between the first rotor and the second rotor and between the stator and the second rotor respectively in the rotating electrical machine, and the control means fixes the first rotor by the fixing means so as not to be rotatable.

According to the vehicle drive mechanism related to the invention, when the vehicle is driven by the motor only and the engine is stopped, it is possible to sufficiently use the torque that can be generated by the motor, while preventing loss of motive power and/or deterioration of the engine.

### BRIEF DESCRIPTION OF THE DRAWINGS

Fig. 1 illustrates a structure of a vehicle drive mechanism related to an embodiment of the invention.
Fig. 2 illustrates a structure in which a slip ring and a disk brake are provided integrally in a modification of a vehicle drive mechanism related to an embodiment of the invention.
Fig. 3 illustrates various structures of a dual rotor motor in a modification of a vehicle drive mechanism related to an embodiment of the invention.

### BEST MODE FOR CARRYING OUT THE INVENTION

Hereafter, an embodiment of the invention will be described on the basis of the accompanying drawings.

### EMBODIMENTS

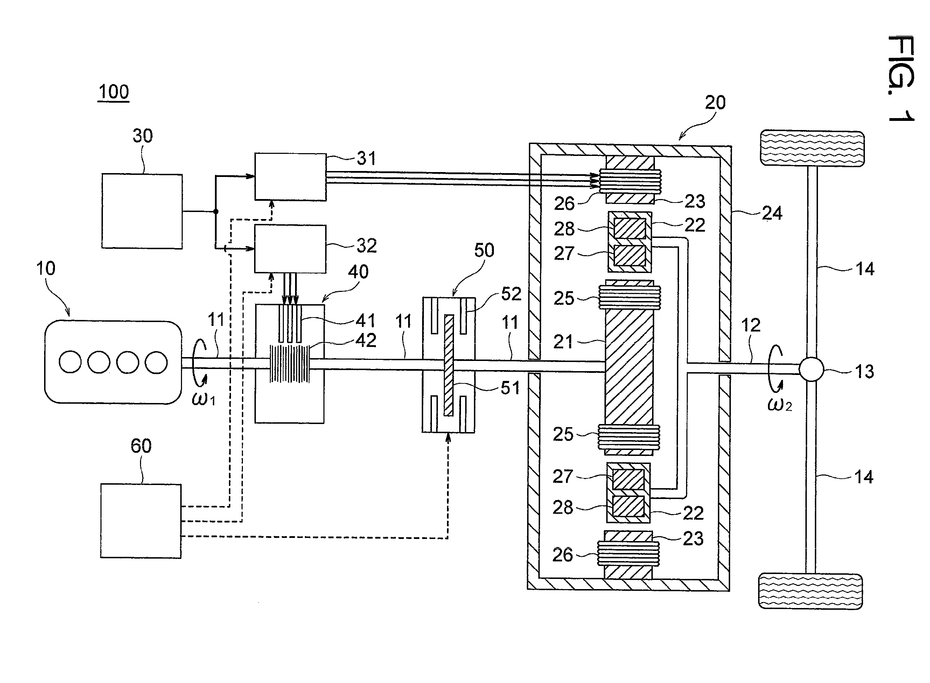

The structure of a vehicle drive mechanism 100 for a hybrid vehicle related to an embodiment of the invention is shown in Fig. 1.

The vehicle drive mechanism 100 comprises an engine 10 and a dual rotor motor 20 as sources of motive force. The engine 10 generates motive power by internally burning gasoline fuel. The dual rotor motor 20 is operated by three-phase AC electric power. The dual rotor motor 20 has a first rotor 21 which is mechanically coupled to a drive shaft 11 of the engine 10 and which rotates integrally with the drive shaft 11, a second rotor 22 which is disposed to the outer side of the first rotor 21 in the radial direction and is mechanically coupled to a vehicle axle 14 via an arm 12 and a differential 13, and a stator 23 which is disposed to the outer side of the second rotor 22 in the radial direction and is fixed to a motor casing 24. The first rotor 21 has a round bar shape and the second rotor 22 and the stator 23 have a circular ring shape, Fig.1 schematically shows the cross-sectional shapes thereof.

A first coil 25 is provided on the first rotor 21, and a second coil 26 is provided on the stator 23. Furthermore, a first magnet 27 is provided in the inner circumferential side of the second rotor 22 so as to oppose the first coil 25 of the first rotor 21, and a second magnet 28 is provided in the outer circumferential side of the second rotor 22 so as to oppose the second coil 26 of the stator 23.

Furthermore, the vehicle drive mechanism 100 comprises a battery 30 which can be charged with and discharge DC electric power, and a first inverter 31 and a second inverter 32 which convert the DC electric power output from the battery 30 into three-phase AC electric power. The first inverter 31 and the second inverter 32 are controlled by a control unit 60 described below. The three-phase AC electric power output from the first inverter 31 is transmitted, via a slip ring mechanism 40 composed of a fixed brush 41 and a rotating ring 42, to a conducting line (not illustrated) laid along the drive shaft 11, and the AC electric power is supplied to the first coil 25 of the first rotor 21 via this conducting line. On the other hand, the three-phase AC electric power output from the second inverter 32 is supplied to the second coil 26 of the stator 23.

A disk brake 50 is provided at an intermediate point of the drive shaft 11. The disk brake 50 fixes the drive shaft 11 and the first rotor 21 which rotates integrally with same, so as to prevent their rotation. The disk brake 50 is composed of a round disk 51 installed on the drive shaft 11 and a friction material 52 which can sandwich the round disk 51 from both sides. The disk brake 50 is controlled by the control unit 60, similarly to the first inverter 31 and the second inverter 32.

The control unit 60 controls the supply of electric power to the first coil 25 of the first rotor 21 and to the second coil 26 of the stator 23, by controlling the first inverter 31 and the second inverter 32. The control unit 60 also controls the rotational state of the drive shaft 11 and the first rotor 21 which rotates integrally with same, by controlling the disk brake 50.

Hereafter, the operation of the hybrid automobile comprising the above vehicle drive mechanism 100 related to the embodiment is described, in which the vehicle is driven by the dual rotor motor 20 only and the engine 10 is stopped.

Firstly, the control unit 60 supplies three-phase AC electric power to the first coil 25 of the first rotor 21 and the second coil 26 of the stator 23, by controlling the first inverter 31 and the second inverter. The control unit 60 also fixes the drive shaft 11 and the first rotor 21 which rotates integrally with same, by controlling the disk brake 50.

As a result, a first electromotive torque is generated between the first coil 25 of the first rotor 21 and the first magnet 27 of the second rotor 22, and a second electromotive torque is generated between the second coil 26 of the stator 23 and the second magnet 28 of the second rotor 22. When the second rotor is rotated by receiving the first and second electromotive torque, the rotation is transmitted to the vehicle axle 14 via the arm 12 and the differential 13, and the vehicle moves.

During this time, when the second rotor 22 is rotated by the first electromotive torque generated between the first rotor 21 and the second rotor 22, the first rotor 21 receives a corresponding reactive force. However, since the drive shaft 11 which rotates integrally with the first rotor 21 is fixed by the disk brake 50 and is unable to rotate, the first rotor 21 is not rotated. Consequently, there is no occurrence of loss of motive force due to driving of the engine 10 which is coupled to the first rotor 11 via the drive shaft 11. Also, there is no eccentric wear and deterioration of the cylinders and/or the piston rings of the engine 10 due to continuous variations in torque.

As described above, in the vehicle drive mechanism 100 for a hybrid automobile related to the embodiment, when the vehicle is driven by the dual rotor motor 20 only and the engine 10 is stopped, first and second electromotive torque is generated between the first rotor 21 and the second rotor 22 and between the stator 23 and the second rotor 22 respectively, by supplying electric power to the dual rotor motor 20 from the first inverter 31 and the second inverter 32. Furthermore, the drive shaft 11 and the first rotor 21 which rotates integrally with it are fixed by the disk brake 50 so as not to be rotatable. Consequently, the first electromotive torque generated between the first rotor 21 and the second rotor 22 and the second electromotive torque generated between the stator 23 and the second rotor 22 are both utilized for the rotation of the second rotor, while preventing the rotation of the first rotor 21 due to receiving a reactive force caused by the rotation of the second rotor 22. As a result, it is possible to sufficiently use the torque that can be generated by the dual rotor motor 20, while preventing loss of motive force and/or deterioration of the engine 10.

### FURTHER EMBODIMENTS

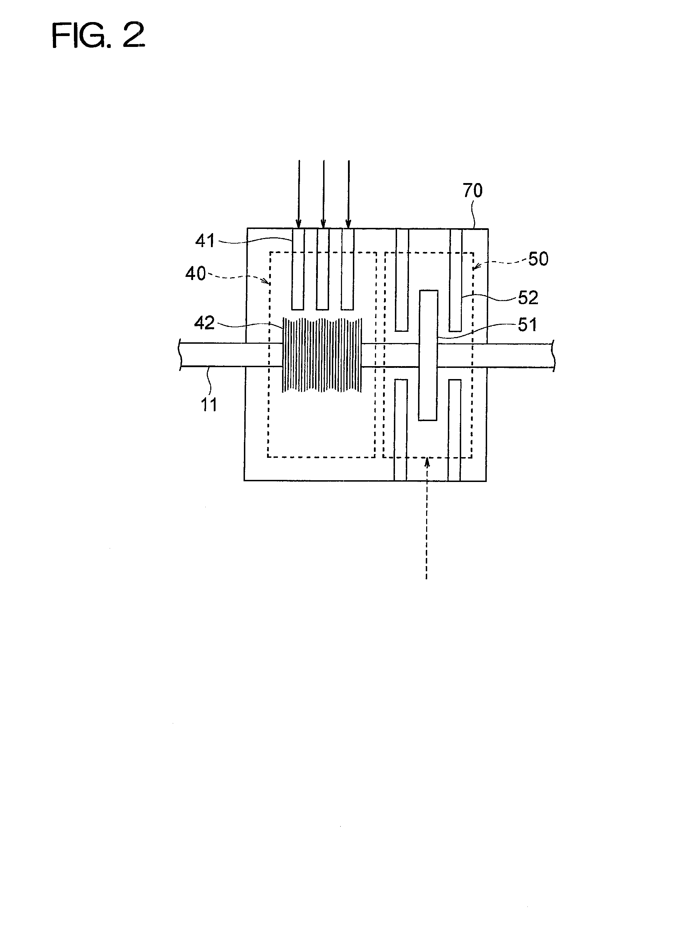

In the embodiments described above, the slip ring mechanism 40 and the disk brake 50 may be provided integrally by being accommodated in a single casing 70, as shown in Fig. 2. Therefore, the overall size of the structure can be reduced, compared to the structure in which the slip ring mechanism 40 and the disk brake 50 are provided in separate fashion.

Furthermore, the first inverter 31, the second inverter 32 and the disk brake 50 may be controlled respectively by separate control units.

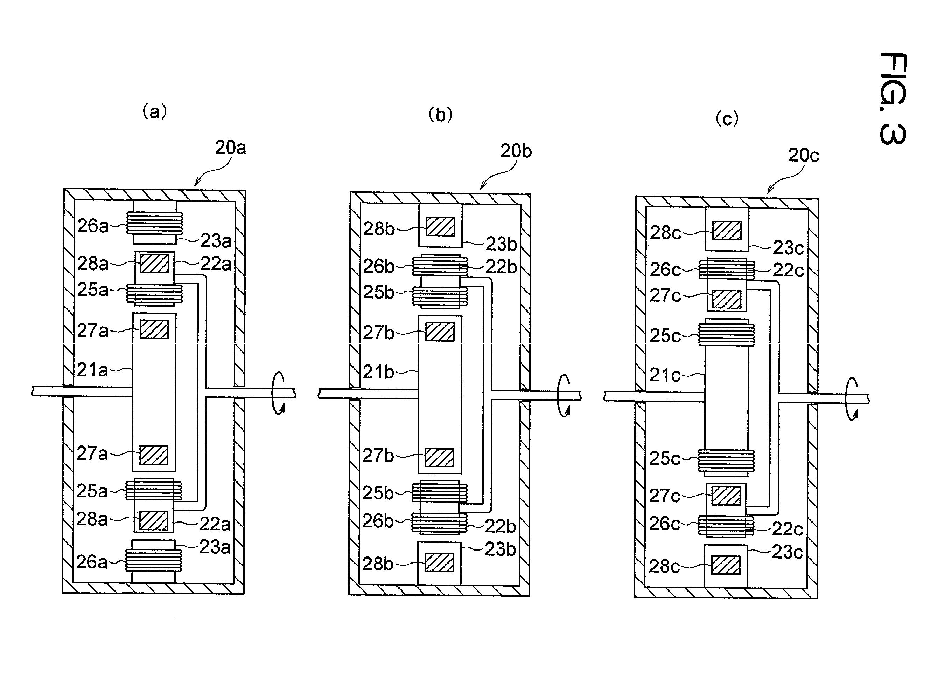

Moreover, the dual rotor motor 20 is not limited to the structure as illustrated in the embodiment given above (Fig. 1), in which a first coil 25, a first magnet 27, a second magnet 28 and a second coil 26 are provided in order from the inner side of the radial direction. For example, the dual rotor motor can also adopt structures as shown in Figs. 3A to 3C. In Fig. 3A, a first magnet 27a, a first coil 25a, a second magnet 28a and a second coil 26a are provided in this order from the inner side of the radial direction. In Fig. 3B, a first magnet 27b, a first coil 25b, a second coil 26b and a second magnet 28b are provided in this order from the inner side of the radial direction. In Fig. 3C, a first coil 25c, a first magnet 27c, a second coil 26c and a second magnet 28c are provided in this order from the inner side of the radial direction.

## Claims

1. A vehicle drive mechanism, comprising:
an internal combustion engine generating motive power by burning fuel;
a rotating electrical machine comprising a first rotor mechanically coupled to the internal combustion engine, a second rotor disposed on the outer side of the first rotor in the radial direction and mechanically coupled to a vehicle axle, and a stator disposed on the outer side of the second rotor in the radial direction;
power supply means for supplying electric power to the rotating electrical machine;
fixing means for fixing the first rotor so as not to be rotatable; and
control means for controlling the power supply means and the fixing means, wherein
when a vehicle is driven by the rotating electrical machine and the internal combustion engine is stopped, the control means supplies electric power to the rotating electrical machine from the power supply means so as to generate first and second electromotive torque between the first rotor and the second rotor and between the stator and the second rotor respectively in the rotating electrical machine, and the control means fixes the first rotor by the fixing means so as not to be rotatable.

2. The vehicle drive mechanism according to claim 1, wherein
the internal combustion engine and the first rotor are mechanically coupled by a drive shaft; and
the fixing means is provided on the drive shaft.

3. The vehicle drive mechanism according to claim 2, wherein
electrical connection means for electrically connecting the power supply means and the rotating electrical machine is provided on the drive shaft; and
the fixing means and the electrical connection means are provided integrally.
